# DEMANDE DE BREVET EUROPEEN

(11) **EP 4 613 565 A1**
(43) Date de publication de la demande: **10.09.2025**
(21) Numéro de dépôt: 25158310.0
(22) Date de dépôt: 17.02.2025
(51) Int. Cl.: B60R 19/12, B60K 11/08

(54) **MODULE D'ENTRÉE D'AIR PILOTÉE, ENSEMBLE COMPRENANT UN TEL MODULE, FACE AVANT DE VÉHICULE ET VÉHICULE COMPRENANT UNE TELLE FACE AVANT**

(30) Priorité: 05.03.2024 FR 2402189
(71) Demandeur: Stellantis Auto SAS, 78300 Poissy (FR)
(72) Inventeur: BOUDAN, JULIEN, 91210 DRAVEIL (FR); PERON, RODOLPHE, 95220 HERBLAY (FR)
(74) Mandataire: BCIP

(57) **Abrégé**

L'invention concerne un module d'entrée d'air pilotée (17) pour face avant (1) de véhicule automobile, ladite face avant comprenant un système d'absorption de chocs inférieur (9) comprenant des caissons déformables inférieurs (11d) et une poutre inférieure (13) s'étendant transversalement relativement audit véhicule et reliant entre eux lesdits caissons, ledit module d'entrée d'air pilotée étant conçu pour réguler le flux d'air le traversant. Selon l'invention, le module d'entrée d'air pilotée comporte au moins deux rampes de déviation (39) s'étendant vers l'arrière, adaptées pour glisser le long d'un bord supérieur (40) de ladite poutre inférieure lorsque ledit module d'entrée d'air pilotée se déplace en translation vers l'arrière de ladite face avant.

## Description

### [Domaine technique]

L'invention a trait au domaine des véhicules automobiles, en particulier au domaine de la sécurité passive du véhicule automobile en cas frontal et en cas de choc piéton.

L'invention concerne plus particulièrement un module d'entrée d'air pilotée pour face avant de véhicule automobile.

L'invention concerne aussi un ensemble comprenant un pare-chocs avant et un tel module, une face avant de véhicule automobile et un véhicule comprenant une telle face avant.

### [Etat de la technique antérieure]

Une face avant d'un véhicule automobile comporte un ensemble d'éléments structurels, comprenant notamment des poutres inférieures longitudinales, couramment appelées « allonges » positionnées parallèlement de part et d'autre d'un groupe motopropulseur.

Au-dessus des allonges, selon la direction verticale de la face avant du véhicule automobile, la face avant comporte des poutres structurelles longitudinales, couramment appelées « brancards », s'étendant longitudinalement relativement au véhicule automobile de part et d'autre du groupe motopropulseur du véhicule automobile.

Classiquement, la face avant comporte un système d'absorption de chocs supérieur comportant des caissons déformables supérieurs prolongeant les extrémités avant des poutres structurelles longitudinales ou brancards. Les caissons déformables supérieurs, couramment appelés « crash-boxes » ou « sacrificiels », sont configurés pour être comprimés en cas de choc notamment frontal du véhicule automobile, de manière à absorber les efforts.

A l'avant des caissons déformables supérieurs, le système d'absorption de chocs supérieur comporte une poutre réparabilité, ou poutre avant supérieure, s'étendant transversalement relativement au véhicule automobile et reliant entre eux les caissons déformables supérieurs.

De la même manière, la face avant comporte un système d'absorption de chocs inférieur comportant des caissons déformables inférieurs prolongeant les extrémités avant des poutres inférieures longitudinales ou allonges. A l'avant des caissons déformables inférieurs, le système d'absorption de chocs inférieur comporte une poutre inférieure, s'étendant transversalement relativement au véhicule automobile et reliant entre eux les caissons déformables inférieurs.

La face avant comporte en outre un pare-chocs avant et, en arrière du pare-chocs avant, un module d'entrée d'air piloté, fréquemment désigné par l'acronyme « MEAP ».

Le MEAP a pour but d'améliorer l'aérodynamisme du véhicule automobile et, lorsque le véhicule automobile est un véhicule automobile électrique, pour augmenter son autonomie.

Le MEAP comporte typiquement une cassette d'entrée d'air pilotée conçue pour interdire, limiter ou autoriser l'entrée d'air sous le capot, bordée par un cadre périphérique structurel.

Lorsque le véhicule automobile est électrique, le MEAP peut être fixé directement sur le pare-chocs avant, contrairement à d'autres configurations où il est fixé sur la structure de caisse du véhicule en arrière du pare-chocs avant.

Une architecture de face avant propose d'agencer le MEAP en partie inférieure de la face avant. Le MEAP est alors monté directement en arrière d'une grille inférieure du pare-chocs avant et en avant des poutres supérieure et inférieure s'étendant transversalement entre les caissons déformables du système d'absorption de chocs inférieur. L'agencement est tel que le cadre périphérique structurel du MEAP se trouve en vis-à-vis du système d'absorption de chocs inférieur.

En se rapprochant au plus près de la zone d'entrée d'air, on limite les fuites d'air, ce qui permet de refroidir au mieux les batteries du véhicule.

Parmi la pluralité de tests utilisés pour l'homologation des véhicules automobiles, un choc frontal à faible allure consistant à projeter le véhicule automobile sur un mur à une vitesse de 4km/h est pratiqué.

A l'issue de ce test, le véhicule obtient un classement. Il est demandé qu'en cas de choc frontal le MEAP soit préservé au maximum et ne casse pas lors du déroulement du choc.

Lors d'un choc tel choc frontal, le pare-chocs avant recule vers l'arrière du véhicule.

Le MEAP, fixé directement sur le pare-chocs avant, recule ainsi de concert avec le pare-chocs lors d'un choc frontal à faible vitesse.

Le cadre périphérique structurel du MEAP, qui se trouve à l'avant du système d'absorption de chocs inférieur et en vis-à-vis du système d'absorption de chocs inférieur, vient alors buter directement contre le système d'absorption de chocs inferieur lorsque le véhicule subit un choc frontal à faible vitesse.

Un tel impact peut endommager le MEAP, voire entraîner une rupture du cadre périphérique structurel du MEAP.

Aussi, dans le cas d'un choc piéton, le fait que le cadre périphérique structurel du MEAP bute contre le système d'absorption de chocs inferieur crée un point dur augmentant le risque de blessure pour le piéton.

Une solution consistant à réduire la hauteur du MEAP afin d'éviter que le cadre périphérique structurel du MEAP se trouve en vis-à-vis du système d'absorption de chocs inférieur ne serait pas satisfaisante.

En effet, une telle solution ne permettrait pas de conserver la surface d'entrée d'air nécessaire pour refroidir le compartiment moteur et les batteries.

### [Exposé de l'invention]

La présente invention vise à surmonter les inconvénients précités, et concerne pour ce faire un module d'entrée d'air pilotée pour face avant de véhicule automobile, ladite face avant comprenant un système d'absorption de chocs inférieur comprenant des caissons déformables inférieurs et une poutre inférieure s'étendant transversalement relativement audit véhicule automobile et reliant entre eux lesdits caissons déformables inférieurs, ledit module d'entrée d'air pilotée étant conçu pour réguler le flux d'air le traversant, ledit module d'entrée d'air pilotée étant remarquable en ce qu'il comporte au moins deux rampes de déviation s'étendant vers l'arrière dudit module d'entrée d'air pilotée lorsque ledit module d'entrée d'air pilotée est monté dans ladite face avant et étant adaptées pour glisser le long d'un bord supérieur de ladite poutre inférieure dudit système d'absorption de chocs inférieur lorsque ledit module d'entrée d'air pilotée est monté dans ladite face avant et lorsque ledit module d'entrée d'air pilotée se déplace en translation vers l'arrière de ladite face avant

Ainsi, en prévoyant un module d'entrée d'air pilotée qui comporte au moins deux rampes de déviation s'étendant vers l'arrière, adaptées pour glisser le long d'un bord supérieur de la poutre inférieure du système d'absorption de chocs inférieur lorsque ledit module d'entrée d'air pilotée se déplace en translation vers l'arrière de ladite face avant, le module d'entrée d'air pilotée se déplace au-dessus de la poutre inférieure du système d'absorption de chocs inférieur en cas de choc frontal, ce qui permet d'éviter que le module d'entrée d'air pilotée vienne buter contre le système d'absorption de chocs inferieur.

De la sorte, on limite le risque d'endommagement du module d'entrée d'air et le risque de rupture du cadre périphérique structurel du module d'entrée d'air pilotée.

Aussi, le fait que le module d'entrée d'air pilotée se déplace au-dessus de la poutre inférieure du système d'absorption de chocs inférieur permet d'éviter de créer un point dur en cas de choc piéton, ce qui permet de limiter le risque de blessure du piéton.

Selon des caractéristiques optionnelles du module d'entrée d'air pilotée selon l'invention :
- ledit module d'entrée d'air pilotée comporte un cadre périphérique structurel comportant un bord inférieur, ledit cadre périphérique structurel étant adapté pour être fixé sur une partie arrière d'un pare-chocs avant de ladite face avant, et lesdites au moins deux rampes de déviation s'étendent en saillie depuis ledit bord inférieur dudit cadre périphérique structurel ;
- lesdites au moins deux rampes de déviation sont agencées au niveau d'extrémités latérales dudit bord inférieur dudit cadre périphérique structurel ;
- chacune desdites au moins deux rampes de déviation comporte une portion proximale et une portion distale, ladite portion proximale s'étendant depuis ledit cadre périphérique structurel dudit module d'entrée d'air pilotée et ladite portion distale prolongeant ladite portion proximale vers l'arrière lorsque ledit module d'entrée d'air pilotée est monté dans ladite face avant, et en ce que l'angle compris entre ladite portion proximale et ladite portion distale n'est pas plat ;
- l'angle compris entre ladite portion proximale et ladite portion distale est compris entre environ 135° et environ 170° ;
- la largeur d'au moins une desdites au moins deux rampes de déviation est comprise entre environ 10mm et environ 30mm ;
- la longueur d'au moins une desdites au moins deux rampes de déviation est comprise entre environ 60mm et environ 80mm.

L'invention concerne aussi un ensemble pour véhicule automobile, comprenant un pare-chocs avant et un module d'entrée d'air pilotée assemblé audit pare-chocs avant, remarquable en ce que ledit module d'entrée d'air pilotée est selon l'invention.

L'invention concerne également une face avant de véhicule automobile, comprenant :
- un système d'absorption de chocs inférieur comprenant des caissons déformables inférieurs et une poutre inférieure s'étendant transversalement relativement audit véhicule automobile et reliant entre eux lesdits caissons déformables inférieurs,
- un ensemble comprenant un pare-chocs avant et un module d'entrée d'air pilotée assemblé audit pare-chocs avant,
remarquable en ce que ledit ensemble est selon l'invention et en ce que lesdites au moins deux rampes de déviation s'étendent vers l'arrière dudit module d'entrée d'air pilotée, lesdites au moins deux rampes de déviation étant adaptées pour glisser le long d'un bord supérieur de ladite poutre inférieure dudit système d'absorption de chocs inférieur lorsque ledit ensemble se déplace en translation vers l'arrière de ladite face avant.

L'invention concerne aussi un véhicule automobile comportant une face avant, remarquable en ce que ladite face avant est selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] qui est une vue en perspective d'une face avant d'un véhicule automobile selon l'invention vue depuis l'arrière vers l'avant du véhicule automobile.
[Fig. 2] est une vue en perspective montrant le module d'entrée d'air pilotée selon l'invention.
[Fig. 3] est une vue de côté du module d'entrée d'air pilotée, centrée sur la rampe de déviation agencée latéralement relativement audit module.
[Fig. 4] est une vue en perspective du module d'entrée d'air pilotée, centrée sur les rampes de déviation agencées en partie centrale dudit module.
[Fig. 5] est une vue en coupe partielle selon la ligne V-V de la figure 1.

### [Description des modes de réalisation]

Dans la suite de la description, des éléments présentant une structure identique ou des fonctions analogues sont désignés par une même référence.

On adoptera par convention, à titre non limitatif, des orientations longitudinale, verticale et transversale indiquées par le trièdre direct (L, V, T) désignant les axes longitudinal, vertical et transversal du véhicule.

Dans ce qui suit, les termes « gauche », « droit », « inférieur » et « supérieur » s'entendent par rapport au véhicule.

De même, les termes « avant » et « arrière » s'entendent par rapport à l'orientation générale du véhicule tel que pris selon son sens normal de marche.

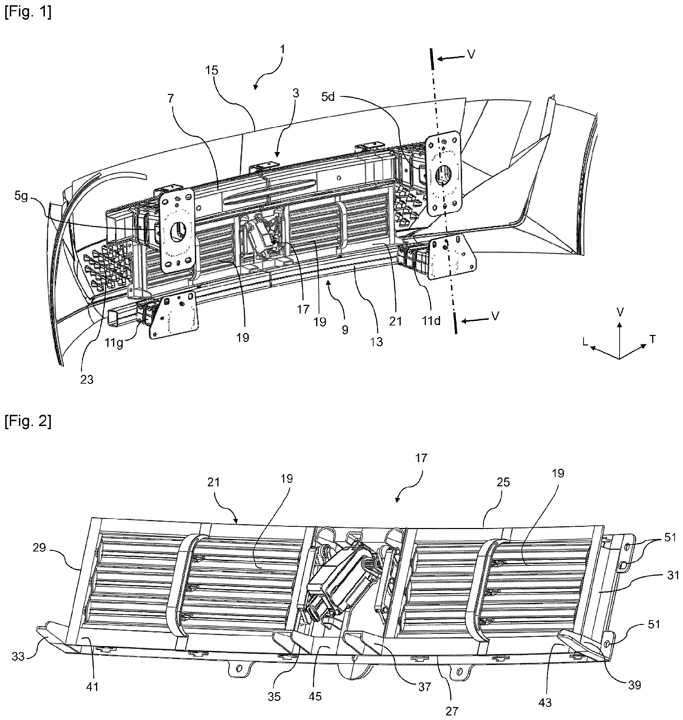

On se réfère à la figure 1 montrant en perspective une face avant 1 d'un véhicule automobile vue depuis l'arrière vers l'avant du véhicule automobile.

Le véhicule automobile peut par exemple être un véhicule automobile hybride ou électrique.

La face avant 1 du véhicule automobile comporte un ensemble d'éléments structurels, comprenant notamment des poutres inférieures longitudinales, ou « allonges » (non représentées), positionnées parallèlement de part et d'autre d'un groupe motopropulseur (non représenté).

Au-dessus des allonges, selon la direction verticale de la face avant 1 du véhicule automobile, la face avant 1 du véhicule automobile comporte deux poutres structurelles longitudinales (non représentées), ou « brancards ».

La face avant 1 comporte un système d'absorption de chocs supérieur 3 comportant des caissons déformables supérieurs 5g, 5d, encore appelés « crash-boxes » ou sacrificiels, montés à gauche et à droite du véhicule automobile, de part et d'autre du groupe motopropulseur et prolongeant les extrémités avant des poutres structurelles longitudinales ou brancards.

A l'avant des caissons déformables supérieurs 5g, 5d, le système d'absorption de chocs supérieur 3 comporte une poutre réparabilité 7 s'étendant transversalement relativement au véhicule automobile et reliant entre eux les caissons déformables supérieurs 5g, 5d.

La face avant 1 comporte en outre un système d'absorption de chocs inférieur 9 comportant des caissons déformables inférieurs 11g, 11d prolongeant les extrémités avant des poutres inférieures longitudinales ou allonges.

A l'avant des caissons déformables inférieurs 11g, 11d, le système d'absorption de chocs inférieur 9 comporte une poutre inférieure 13, s'étendant transversalement relativement au véhicule automobile et reliant entre eux les caissons déformables inférieurs 11g, 11d.

La face avant 1 comporte en outre un pare-chocs avant 15 et, en arrière du pare-chocs avant 15, un module d'entrée d'air piloté 17 désigné par l'acronyme « MEAP ».

Le MEAP 17 comporte un ensemble de cassettes 19 d'entrée d'air pilotées conçues pour interdire, limiter ou autoriser l'entrée d'air sous le capot. Les cassettes 19 sont bordées par un cadre périphérique structurel 21.

Le MEAP 17 est fixé en sur le pare-chocs avant 15, en arrière du pare-chocs avant 15. Le MEAP 17 est monté en partie inférieure de la face avant 1, directement en arrière d'une grille inférieure 23 du pare-chocs avant 15 et en avant des poutres supérieure 5g, 5d et inférieure 11g, 11d.

De la sorte, le MEAP 17 est positionné au plus près de la zone d'entrée d'air, ce qui permet de limiter les fuites d'air et donc de refroidir au mieux les batteries du véhicule.

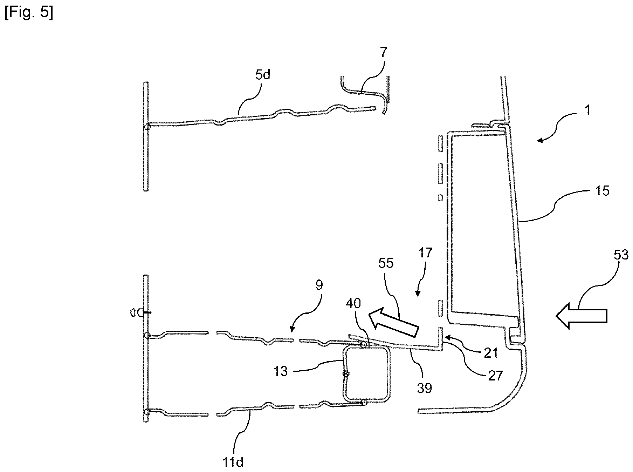

Lorsque le MEAP 17 et le pare-chocs sont montés dans la face avant 1, le cadre périphérique structurel 21 du MEAP 17 se trouve en vis-à-vis du système d'absorption de chocs inférieur 9 (comme mieux visible à la figure 5).

On se réfère à la figure 2 montrant le MEAP 17 en perspective.

Le MEAP 17 comporte l'ensemble de cassettes 19 d'entrée d'air pilotées bordées par le cadre périphérique structurel 21. Le cadre périphérique structurel 21 comporte un bord supérieur 25, un bord inférieur 27, un bord latéral gauche 29 et un bord latéral droit 31.

Selon l'invention, le MEAP 17 comporte des rampes de déviation 33, 35, 37, 39 s'étendant vers l'arrière du MEAP 17 lorsque le MEAP 17 est monté dans la face avant 1.

Comme on va le voir plus en détails dans la suite de la description, les rampes de déviation 33, 35, 37, 39 sont adaptées pour glisser le long d'un bord supérieur 40 (visible à la figure 5) de la poutre inférieure 13 du système d'absorption de chocs inférieur 9 lorsque le MEAP 17 est monté dans la face avant 1 et lorsque le MEAP 17 se déplace en translation vers l'arrière de la face avant 1.

Dans l'exemple de réalisation illustré aux figures, les rampes de déviation 33, 35, 37, 39 s'étendent en saillie depuis le bord inférieur 27 du cadre périphérique structurel 21 du MEAP 17.

Dans l'exemple de réalisation illustré aux figures, quatre rampes de déviation 33, 35, 37, 39 équipent le MEAP 17.

Par exemple, deux rampes déviation 33, 39 sont agencées latéralement respectivement au niveau des extrémités latérales gauche 41 et droite 43 du bord inférieur 27 du cadre périphérique structurel 21 du MEAP 17 et deux rampes de déviation 35, 37 sont agencées en partie centrale 45 du bord inférieur 27.

Selon une variante de réalisation non représentée aux figures, un nombre distinct de rampes de déviation peut équiper le MEAP 17.

En particulier, seulement deux des rampes de déviation 33, 35, 37, 39 peuvent équiper le MEAP 17. Selon cette variante de réalisation, le MEAP 17 comporte par exemple seulement les rampes de déviation 33, 39 agencées latéralement respectivement au niveau des extrémités latérales gauche 41 et droite 43 du bord inférieur 27 du cadre périphérique structurel 21 du MEAP 17.

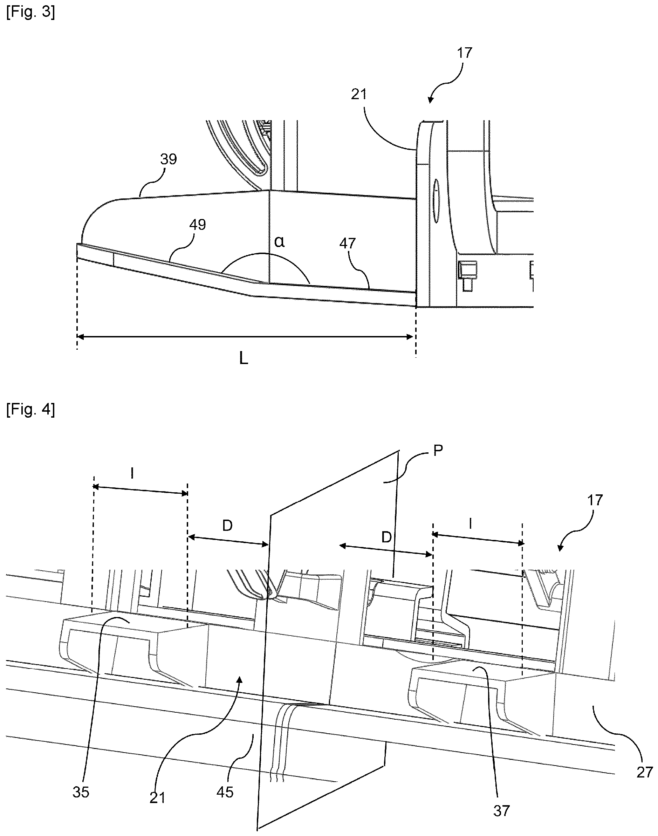

On se réfère à la figure 3 qui est une vue de côté du MEAP 17 centrée sur la rampe de déviation 39 agencée latéralement au niveau de l'extrémité latérale droite 43 du bord inférieur 27 du cadre périphérique structurel 21 du MEAP 17.

La rampe de déviation 39 comporte une portion proximale 47 s'étendant depuis le cadre périphérique structurel 21 du MEAP 17 et une portion distale 49 prolongeant la portion proximale 47 vers l'arrière du véhicule automobile lorsque le MEAP 17 est monté dans la face avant 1.

Selon une disposition de l'invention, l'angle α compris entre la portion proximale 47 et la portion distale 49 n'est pas plat, c'est-à-dire qu'il n'est pas égal à 180°.

Par exemple, l'angle α est compris entre environ 135° et environ 170°. Dans une réalisation particulière, l'angle α eut être égal à environ 150°.

Selon une disposition de l'invention, la longueur L de la rampe de déviation 39 peut être comprise entre environ 60mm et environ 80mm. Dans une réalisation particulière, la longueur L est égale à environ 70mm.

La description qui vient d'être faite en référence à la figure 3 pour la rampe de déviation 39 s'applique aux rampes de déviation 33, 35, 37.

On se réfère à la figure 4 qui est une vue en perspective du MEAP 17 centrée sur les rampes de déviation 35, 37 agencées en partie centrale 45 du bord inférieur 27.

Dans l'exemple de réalisation illustré aux figures, les rampes de déviation 35, 37 sont réparties à égale distance D d'un plan médian P du cadre périphérique structurel 21 du MEAP 17.

Aussi, selon une disposition, la largeur I d'au moins une des rampes de déviation 33, 35, 37, 39 (seules les rampes de déviation 35, 37 étant visibles à la figure 4) est comprise entre environ 10mm et environ 30mm. Dans une réalisation particulière, la largeur I est égale à environ 20mm.

Selon une disposition de l'invention, le MEAP 17 est fixé sur le pare-chocs avant 15 avant intégration de l'ensemble formé par le pare-chocs 15 et par le MEAP 17 dans la face avant 1.

Afin de permettre la fixation du MEAP 17 sur le pare-chocs avant 15, le cadre périphérique structurel 21 du MEAP 17 comporte des orifices de fixation 51 (deux des orifices de fixation 51 étant visibles à la figure 2).

Les orifices de fixation 51 sont répartis aux quatre coins du cadre périphérique structurel 21 et sont destinés à recevoir des éléments de fixation (non représentés), tels que des vis de fixation.

On se réfère à la figure 5 qui est une vue en coupe partielle selon la ligne V-V de la figure 1.

Lorsque le véhicule automobile subit un choc frontal, l'ensemble formé par le pare-chocs 15 et par le MEAP 17 fixé au pare-chocs 15 se déplace en translation vers l'arrière de la face avant 1, comme représenté par la flèche 53.

Les rampes de déviation 33, 35, 37, 39 (seule la rampe de déviation 39 étant visible à la figure 5), adaptées pour glisser le long du bord supérieur 40 de la poutre inférieure 13 du système d'absorption de chocs inférieur 9, permettent un déplacement du MEAP 17 au-dessus de la poutre inférieure 13 du système d'absorption de chocs inférieur 9, comme représenté par la flèche 55.

Le MEAP 17 poursuit sa course au-dessus de la poutre inférieure 13 du système d'absorption de chocs inferieur 9 et évite le système d'absorption de chocs inferieur 9.

Les risques d'endommagement du MEAP 17 et de rupture du cadre périphérique structurel 21 du MEAP 17 sont par conséquent limités.

Aussi, on évite de créer un point dur en cas de choc piéton, ce qui permet de limiter le risque de blessure du piéton.

Comme il va de soi, la présente invention ne se limite pas aux seules formes de réalisation de ce module d'entrée d'air pilotée pour face avant de véhicule automobile, de cet ensemble comprenant un pare-chocs et un tel module d'entrée d'air pilotée, de cette face avant comprenant un tel ensemble et de ce véhicule automobile comportant une telle face avant, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Module d'entrée d'air pilotée (17) pour face avant (1) de véhicule automobile, ladite face avant (1) comprenant un système d'absorption de chocs inférieur (9) comprenant des caissons déformables inférieurs (11g, 11d) et une poutre inférieure (13) s'étendant transversalement relativement audit véhicule automobile et reliant entre eux lesdits caissons déformables inférieurs (11g, 11d), ledit module d'entrée d'air pilotée (17) étant conçu pour réguler le flux d'air le traversant, ledit module d'entrée d'air pilotée (17) étant **caractérisé en ce qu'**il comporte au moins deux rampes de déviation (33, 35, 37, 39) s'étendant vers l'arrière dudit module d'entrée d'air pilotée (17) lorsque ledit module d'entrée d'air pilotée (17) est monté dans ladite face avant (1) et étant adaptées pour glisser le long d'un bord supérieur (40) de ladite poutre inférieure (13) dudit système d'absorption de chocs inférieur (9) lorsque ledit module d'entrée d'air pilotée (17) est monté dans ladite face avant (1) et lorsque ledit module d'entrée d'air pilotée (17) se déplace en translation vers l'arrière de ladite face avant (1).

2. Module d'entrée d'air pilotée (17) selon la revendication 1, dans lequel ledit module d'entrée d'air pilotée (17) comporte un cadre périphérique structurel (21) comportant un bord inférieur (27), ledit cadre périphérique structurel (21) étant adapté pour être fixé sur une partie arrière d'un pare-chocs avant (15) de ladite face avant (1), **caractérisé en ce que** lesdites au moins deux rampes de déviation (33, 35, 37, 39) s'étendent en saillie depuis ledit bord inférieur (27) dudit cadre périphérique structurel (21).

3. Module d'entrée d'air pilotée (17) selon la revendication 2, **caractérisé en ce que** lesdites au moins deux rampes de déviation (33, 35, 37, 39) sont agencées au niveau d'extrémités latérales (41, 43) dudit bord inférieur (27) dudit cadre périphérique structurel (21).

4. Module d'entrée d'air pilotée (17) selon l'une des revendications 2 ou 3, **caractérisé en ce que** chacune desdites au moins deux rampes de déviation (33, 35, 37, 39) comporte une portion proximale (47) et une portion distale (49), ladite portion proximale (47) s'étendant depuis ledit cadre périphérique structurel (21) dudit module d'entrée d'air pilotée (17) et ladite portion distale (49) prolongeant ladite portion proximale (47) vers l'arrière lorsque ledit module d'entrée d'air pilotée (17) est monté dans ladite face avant (1), et **en ce que** l'angle (α) compris entre ladite portion proximale (47) et ladite portion distale (49) n'est pas plat.

5. Module d'entrée d'air pilotée (17) selon la revendication 4, **caractérisé en ce que** l'angle compris entre ladite portion proximale (47) et ladite portion distale (49) est compris entre environ 135° et environ 170°.

6. Module d'entrée d'air pilotée (17) selon la revendication l'une quelconque des revendications 1 à 5, **caractérisé en ce que** la largeur (I) d'au moins une desdites au moins deux rampes de déviation (33, 35, 37, 39) est comprise entre environ 10mm et environ 30mm.

7. Module d'entrée d'air pilotée (17) selon la revendication l'une quelconque des revendications 1 à 6, **caractérisé en ce que** la longueur (L) d'au moins une desdites au moins deux rampes de déviation (33, 35, 37, 39) est comprise entre environ 60mm et environ 80mm.

8. Ensemble pour véhicule automobile, comprenant un pare-chocs avant (15) et un module d'entrée d'air pilotée (17) assemblé audit pare-chocs avant (15), **caractérisé en ce que** ledit module d'entrée d'air pilotée (17) est selon l'une quelconque des revendications 1 à 7.

9. Face avant (1) de véhicule automobile, comprenant :
- un système d'absorption de chocs inférieur (9) comprenant des caissons déformables inférieurs (11g, 11d) et une poutre inférieure (13) s'étendant transversalement relativement audit véhicule automobile et reliant entre eux lesdits caissons déformables inférieurs (11g, 11d),
- un ensemble comprenant un pare-chocs avant (15) et un module d'entrée d'air pilotée (17) assemblé audit pare-chocs avant (15),
**caractérisé en ce que** ledit ensemble est selon la revendication 8 et **en ce que** lesdites au moins deux rampes de déviation (33, 35, 37, 39) s'étendent vers l'arrière dudit module d'entrée d'air pilotée (17), lesdites au moins deux rampes de déviation (33, 35, 37, 39) étant adaptées pour glisser le long d'un bord supérieur (40) de ladite poutre inférieure (13) dudit système d'absorption de chocs inférieur (9) lorsque ledit ensemble se déplace en translation vers l'arrière de ladite face avant (1).

10. Véhicule automobile comprenant une face avant (1), **caractérisé en ce que** ladite face avant (1) est selon la revendication 9.
